# EUROPEAN PATENT APPLICATION

(11) **EP 3 591 946 A1**
(43) Date of publication of application: **08.01.2020**
(21) Application number: 18382495.2
(22) Date of filing: 04.07.2018
(51) Int. Cl.: H04M 1/04, H04M 1/60, G01H 3/00, G01H 3/12, G01H 17/00, H04M 1/24, H04R 25/00, H04R 29/00, H04B 17/11, H04B 17/13, H04B 17/23

(54) **APPARATUS AND METHOD ADJUSTING THE SOUND LEVEL GAIN OF MOBILE DEVICES**

(71) Applicant: Fundación Tecnalia Research & Innovation, 48160 Derio - Bizkaia (ES)
(72) Inventor: VAZQUEZ SUAREZ, Manuel, 48160 Derio - Bizkaia (ES); ASPURU SOLOAGA, Itziar, 48160 Derio - Bizkaia (ES); SANTANDER PANTIOSO, Alvaro, 48160 Derio - Bizkaia (ES); GARCIA PEREZ, Igone, 48160 Derio - Bizkaia (ES)
(74) Representative: Balder IP Law, S.L.

(57) **Abstract**

An apparatus for adjusting a sound level gain of a mobile device comprising: a support for the mobile device; a broadband signal generator configured to produce an electric signal; and a sound emitter configured to emit a sound wave corresponding to the electric signal. And a method for adjusting a sound level gain of a mobile device, the mobile device being configured to provide information relating to a sound pressure level of a registered sound, the method comprising: providing an apparatus configured to emit a sound wave and to situate the mobile device for adjusting the gain; situating the mobile device in the apparatus; emitting a sound wave at a determined sound pressure level from the device; registering the sound wave emitted with the mobile device; and modifying a sound pressure level gain adjustment of the mobile device so that information relating to the sound pressure level of the registered sound wave coincides with a sound pressure level anticipated at a point of the apparatus at which the mobile device is situated, the anticipated sound pressure level being based on the determined sound pressure level.

## Description

### TECHNICAL FIELD

The present invention relates to the field of adjusting sound levels and more specifically to apparatuses for adjusting the sound levels of mobile devices (preferably smart devices such as smartphones, smartwatches, tablets, etc.), as well as methods and systems for adjusting sound levels of these devices.

### BACKGROUND OF THE INVENTION

Sonometers are devices known in the prior art which are used to measure the noise level of an environment, particularly the sound pressure level. In order to be able to carry out a correct measurement, sonometers should be calibrated before being used for the first time and over time since it is necessary to verify and, as the case may be, to adjust the response of the microphone of the sonometers. In this respect, sonometer calibrators are devices which emit sounds at one or various frequencies at a known sound pressure level. A sonometer is connected to a calibrator by way of a cavity of said calibrator such that the sound pressure level received by the sonometer is a value stable at level and frequencies which allow it to be verified whether the measured level is within the acceptable margins and therefore it can be decided that the equipment is suitable, or in contrast, to know the correction required to obtain a correct measurement.

Generally, both sonometers and sonometer calibrators are devices which are not available to the average user and which only certain technicians acquire. The limited use which a person may have for such devices day to day, together with their high price, makes these devices very far removed from daily life.

However, the development of the technology and the availability of equipment that can register sound levels when it has a microphone and hardware and software for processing that signal, and the significant development of applications which help to measure and analyze noise, make that the ability to measure noise levels of an environment is expanding.

The authors of the present invention have observed that the majority of individuals have a potential sonometer, although with limited features: a mobile device with an operating system capable of executing applications which, processing the signal entering through the microphone of the device, have a series of parameters or indicators of the approximate noise level present in an environment. Given that the mobile device includes a microphone, the mobile device may act as a sonometer, although with certain limitations as indicated. Particularly, the mobile device can be used to provide indicative values of a sound pressure level which is often sufficient, even though it could never carry out a precise measurement. To this end, the mobile device should be capable of providing information on the sound pressure level measured by the microphone, for example by means of an application executed on the mobile device.

The authors of the present invention have found, in different studies, that the numerous applications available on the market give incoherent results for the majority of the cases and the problem is not in the application itself, in general, but in the difficulty of controlling the configuration of the device itself. Each mobile device is equipped with different microphone systems and hardware which are optimized for correct operation as a cellphone device or other purposes which means that when the application receives a signal, it will be processed according to each device and will be modified by the application in each device in a different manner. This means that the same application installed on different devices, as a result, provides very different levels, in some cases with differences of more than 20 dBA which means that the solution is not effective even for providing indicative values of a sound pressure level. Additionally, in some cases, the applications, knowing this problem, introduce a parameter allowing the user to initiate a gain adjustment which allows the signal of the system to be adjusted after using said system to measure a known value level, reference level.

### DESCRIPTION OF THE INVENTION

In a first aspect of the invention, an apparatus is presented for adjusting a sound level gain of a mobile device comprising: a support for the mobile device; a broadband signal generator configured to produce an electric signal; and a sound emitter configured to emit a sound wave corresponding to the electric signal.

The apparatus makes possible the adjustment of the sound level gain of a mobile device such that said device can provide values representative of sound pressure levels at a point of an environment.

The mobile device is situated in the support of the apparatus such that the registering (or the recording) of the sound wave (a pressure wave) of the sound emitter is registered at a determined distance from the sound emitter. The sound wave emitted by the sound emitter is transmitted through the air and is registered by the microphone of the mobile device. When the apparatus is configured such that the sound level is known at which the microphone of the mobile device should register the sound wave, it is possible to determine how much the gain of the device (or of an application of the same) should be adjusted so that the indication provided by the device (or the application of the same) corresponds to the sound level at which the microphone should have registered the sound wave.

The broadband signal generator which can emit in the entire audible frequency range between 20 Hz and 10 KHz, provides an electric signal which is transmitted to the sound emitter which converts the electric signal into an acoustic signal (that is to say sound waves or pressure waves) which is emitted. In this respect, in preferred embodiments, the sound emitter is an electroacoustic transducer. The electroacoustic transducer is, for example, a speaker whose output is a sound emission when it receives an electric signal.

In some embodiments, the broadband signal generator is configured to produce the sound wave at a determined frequency or a third octave band determined within the audible frequency range.

The broadband signal generator can be a signal generator configured to produce the electric signal as a tone of a predetermined frequency, for example 1 kilohertz, 1,5 kilohertz, 2 kilohertz, etc. In some cases, the broadband signal generator is configured to adjust the electric signal frequency. In other cases, the broadband signal generator is not configured to adjust the frequency of the electric signal, only making it possible to generate a signal of a predetermined frequency e.g. 1 kilohertz, thus reducing the complexity of the apparatus and its cost.

In some embodiments, the apparatus further comprises conditioning means of the electric signal configured to adjust the level of the electric signal to a determined level.

A conditioning stage allows the level of the electric signal to be adjusted such that the emission of sound waves at a predetermined sound pressure level, for example but not limited to, a sound pressure level greater than 80 dBA (that is to say, decibels A), for example 90 dBA, 94 dBA, etc.

In some embodiments, the support comprises a first element and a second element, the sound emitter is arranged in the second element of the support, and the first element is adapted to situate the mobile device on top of said first element.

In some embodiments, the first element is joined mechanically to the second element.

In some embodiments, the first element and the second element are arranged in an angular manner. In some of these embodiments, the first element and the second element are arranged in a perpendicular manner (at an angle of between 80°and 100°).

The first element can act as a base of the apparatus on which the mobile device is situated. The second element, in which the sound emitter is supported, is arranged such that the sound wave of the sound emitter mainly goes towards the mobile device when the mobile device is situated on the first element.

In some embodiments, the first element and the second element of the support are joined mechanically in an articulated manner.

An articulation of the support allows at least switching between two positions or configurations, for example between a closed position or configuration which facilitates the transport and storage of the apparatus and an open position or configuration which makes the correct operation of the apparatus possible. To this end, in the closed configuration, the first and second elements of the support are preferably arranged in a parallel manner (i.e. they have a normal vector to their main plane which is parallel to the normal vector of the main plane of the other element of the support); in the open configuration, the first and second elements of the support are preferably arranged in a perpendicular manner.

In some embodiments, the first element is not joined to the second element. In these embodiments, the device further comprises an element indicating relative positioning between the first element and the second element.

The first and second elements of the support can be provided separately such that the mobile device is arranged on top of the first element and the sound emitter is arranged in the second element. By means of the indicator element, the first element of the support can be positioned with respect to the second element of the support such that it is possible to carry out the gain adjustment of the mobile device.

In some embodiments, the apparatus further comprises at least one positioning indicator element of the mobile device, the at least one indicator element being arranged in the support. In some embodiments, the at least one positioning indicator element is arranged in the first element of the support.

In some embodiments, the support comprises an element adapted for situating the mobile device and the sound emitter on top of said element. In these embodiments, the apparatus preferably further comprises at least one positioning indicator element of the mobile device and the sound emitter, the at least one indicator element being arranged in the support, particularly in the element of the support.

The at least one positioning indicator element shows or represents how a mobile device should be positioned so as to be adjusted with the apparatus. The at least one indicator element preferably shows the level (of sound pressure) which the mobile device should register for which it is desired to adjust the gain (e.g. a mobile device as a smartphone, a smartwatch, a tablet, etc.) at one or more points of the at least one indicator element as well as the most suitable orientation of the microphone of the mobile device to register the sound wave of the sound emitter. The attainment of the indicated sound levels in the indicator element is preferably carried out by means of tests in a low-noise environment (conditioned room) of the sound pressure levels measured with a sonometer analyzing a calibrated reference and a repeatability and reproducibility analysis of the same is also carried out.

In some embodiments, the apparatus further comprises a screen.

In some embodiments, the screen is configured to show an anticipated sound pressure level at one or more points of the apparatus at which the mobile device should be situated. In some of these embodiments, the apparatus further comprises at least one positioning indicator element which indicates the one or more determined points of the support. In some embodiments, the one or more determined points of the support is one or more determined points of the first element of the support.

In some embodiments, the screen is configured to show a sound pressure level at which the sound emitter emits the sound wave.

In some embodiments, the screen is configured to show the sound pressure level in dBA.

The user can adjust, by means of the gain adjustment process of the mobile device or an application used on the same, one or more parameters of the mobile device so that the sound pressure level registered is the same value shown on the screen or in at least one indicator element of the anticipated sound pressure level at one or more points of the apparatus at which the mobile device should be situated.

In a second aspect of the invention, a method is presented for adjusting a sound level gain of a mobile device, the mobile device being configured to provide information relating to a sound pressure level of a registered sound, the method comprising:
- providing an apparatus configured to emit a sound wave and to situate the mobile device for adjusting the gain;
- situating the mobile device in the apparatus;
- emitting a sound wave at a determined sound pressure level from the device;
- registering the sound wave emitted with the mobile device; and
- modifying a sound pressure level gain adjustment of the mobile device so that information relating to the sound pressure level of the registered sound wave coincides with a sound pressure level anticipated at a point of the apparatus at which the mobile device is situated, the anticipated sound pressure level being based on the determined sound pressure level.

In order to carry out the adjustment to the gain of the sound level of a mobile device, an element of the apparatus is used which is capable of emitting a sound wave controlled in terms of sound pressure level which makes it possible to adjust the mobile device. The apparatus preferably defines the suitable form to support the mobile device during the adjustment process.

In some embodiments, the apparatus is an apparatus for adjusting a sound level gain of a mobile device according to the first aspect of the invention.

In some embodiments, the method further comprises orienting the mobile device such that a microphone of the mobile device is oriented towards a component of the apparatus configured to emit the sound wave. The step of orienting the mobile device takes place after the step of situating the mobile device in the apparatus.

It is convenient to adjust the orientation of the mobile device so that there is a direct line of sight between the microphone of the mobile device and the component emitting the sound wave. The apparatus preferably comprises at least one indicator element which shows how the mobile device should be positioned and possibly oriented.

Both the operating system and an application (particularly a sound pressure level evaluating application) executed on the mobile device can have one or more adjustable parameters such as gain, attenuation, signal filtering, etc. In general, these parameters modify the digital processing carried out via the electric signal resulting from the sound recording, once the recording has been digitalized by means of an analog-to-digital converter. The sound pressure level indicated by the mobile device can vary by modifying one or several of these parameters.

Additionally, several applications of the mobile device which can provide information relating to the sound pressure level of a registered sound wave can be programmed such that they provide a different sound pressure level value for the same sound, precisely by way of the digital processing which is carried out. Therefore, the adjustment of one or more parameters may have to be carried out for each one of the applications of the mobile device which is desired to be calibrated.

The mobile device and the application together define the scale range of the measurement (maximum level and minimum level) of its mobile device, an aspect which the owner of the mobile device should know since the measurements are potentially adjustable only in this range.

The mobile device to be adjusted can have more than one microphone and the application and the apparatus define which microphone is used to obtain the registration of the sound wave. In different mobile devices, the microphone used is not the microphone intended for communication, but the one intended to obtain the environmental noise.

In some embodiments, the step of emitting a sound wave at a determined sound pressure level from the device comprises emitting a sound wave from the device at a determined sound pressure level and a determined frequency.

Advantages similar to those described for the first aspect of the invention may also be valid for the second aspect of the invention.

In a third aspect of the invention, a system for adjusting a sound level gain of a mobile device comprising: an apparatus according to the first aspect of the invention; and the mobile device, the mobile device being configured to provide information relating to a sound pressure level of a registered sound wave and to allow one or more parameters of the mobile device to be adjusted which causes the information relating to the sound pressure level of the registered sound wave to coincide with a determined sound pressure level.

Advantages similar to those described for the first and second aspects of the invention may also be valid for the third aspect of the invention.

### BRIEF DESCRIPTION OF THE DRAWINGS

In order to complement the description being made and with the object of helping to better understand the features of the invention, in accordance with preferred practical exemplary embodiments thereof, said description is accompanied, as an integral part thereof, by a set of figures where, in an illustrative and non-limiting manner, the following has been represented:
Figure 1 shows, in the form of a diagram, an apparatus according to an embodiment of the invention.
Figures 2 to 5 show apparatuses according to embodiments of the invention.
Figure 6 partially shows an apparatus according to an embodiment of the invention.

### DESCRIPTION OF A WAY OF CARRYING OUT THE INVENTION

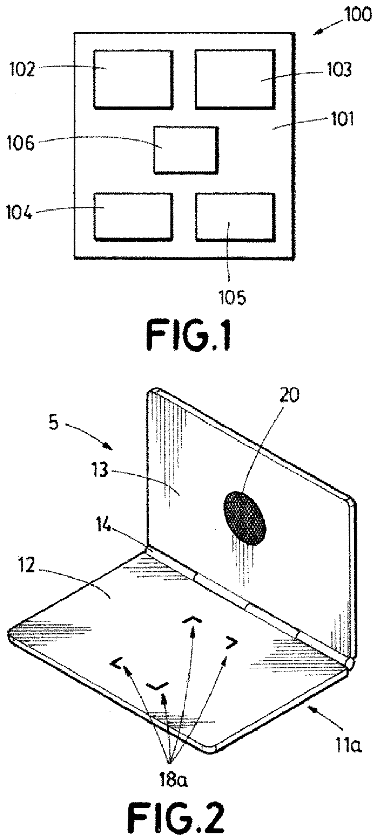

Figure 1 shows, in the form of a diagram, an apparatus 100 according to an embodiment of the invention.

The apparatus 100 comprises: a support 101 for a mobile device; a broadband signal generator 102 which is configured to produce an electric signal; a sound emitter 103 connected to the broadband signal generator 102 and configured to emit a sound wave corresponding to the electric signal provided by the broadband signal generator 102; one or more positioning indicator elements 104 of the mobile device in the support 101 and/or indication of the sound pressure level which the mobile device should register at one or more points of the one or more indicator elements 104; one or more buttons 105 for operating the apparatus 100 by a user (e.g. buttons for turning on, turning off, activating sound emission, recording sound, etc.); and a power source 106 such as one or more batteries electrically supplying the apparatus 100.

In some embodiments, the support 101 of the apparatus 100 also serves as a support for one or more components of the apparatus 100. That is to say, one or more components of the apparatus 100 can be installed in the support, for example the broadband signal generator 102 and/or the sound emitter 103. In some embodiments, the broadband signal generator 102 is coupled to the sound emitter 103.

Figure 2 shows an apparatus 5 for adjusting a sound level gain of a mobile device according to one embodiment of the invention.

The apparatus 5 comprises a support 11a, a broadband signal generator (not illustrated) and a sound emitter 20. The support 11a comprises a first element or platform 12 and a second element or platform 13.

The first element or platform 12 and the second element or platform 13, in this embodiment, are mechanically connected by means of an articulation 14 comprising a shaft (in other embodiments, the articulation may comprise for example a plurality of shafts or one or more hinges).

Several positioning indicator elements 18 of a mobile device are arranged on the first element or platform 12; in the example of Figure 2, the several indicator elements 18 are indicators representing a surface on which the mobile device should be positioned according to the relative position of the sound emitter 20 in the apparatus 5.

The sound emitter 20 which produces a sound wave is located in the second element or platform 13. A broadband signal generator is located inside the second element or platform 13 which generates an electric signal received by the sound emitter 20 to produce the sound wave.

The apparatus 5 can change its arrangement or configuration by means of the articulation 14. A first arrangement or configuration (shown in Figure 1) is an open arrangement or configuration or operation of the apparatus 5 such that the sound emitter 20 can emit the sound wave, for example towards the mobile device when it is situated on the first element or platform 12 (according to the indicator elements 18). In this first arrangement or configuration, as can be observed in Figure 1, a plane containing the largest surface (that is to say the face on which the indicator elements 18 are located) of the first element or platform 12 is angular to a plane containing the largest surface (that is to say the face on which the sound element 20 is provided) of the second element or platform 13.

A second arrangement or configuration (not illustrated) of the apparatus 5 is a closed arrangement or configuration which facilitates the transport and storage of the apparatus 5. In this second arrangement or configuration, the plane containing the largest surface of the first element or platform 12 is parallel to the plane containing the largest surface of the second element or platform 13; additionally, the first element or platform 12 can be in contact with the second element or platform 13.

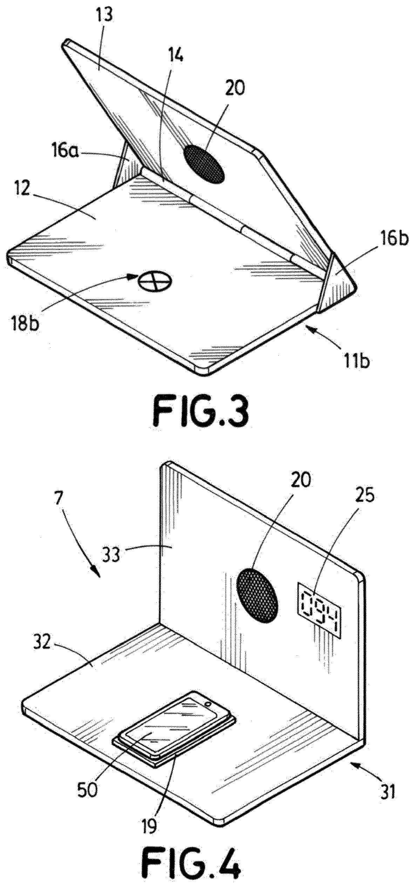

Figure 3 shows an apparatus 6 according to an embodiment of the invention.

The apparatus 6 comprises a support 11b, a broadband signal generator (not illustrated) and a sound emitter 20. The support 11b comprises the first element or platform 12, the second element or platform 13, the articulation 14 and open and/or close limiters 16a-16b of the support 11b.

The limiters 16a-16b are mechanical elements which prevent the arrangement of the first element or platform 12 with respect to the second element or platform 13 being able to exceed a determined angle or distance when the support 11b is opened by means of the articulation 14. Additionally, the limiters 16a-16b can hold the angular arrangement of the support 11b to prevent the closure of the same.

In this example, the support 11b is adapted so that the gain adjustment of an electronic device is carried out with an angular arrangement less than 90°, for example but not limited to 35°, 45°, 60°, etc. One or more indicator elements 18b show where the mobile device should be situated in the support 11b, particularly in the first element or platform 12 so that the sound emitter 20 arranged in the second element or platform 12 emits the sound wave towards the device. Knowing the sound pressure level at which the mobile device should register the sound wave while it is positioned in the first element or platform 12, for example by means of one or more elements indicating said sound pressure level, the adjustment of the gain of the mobile device can be carried out.

Figure 4 shows an apparatus 7 for adjusting the gain of a mobile device 50 according to one embodiment of the invention.

The apparatus 7 comprises a support 31 which in turn comprises a first element or platform 32 and a second element or platform 33. The apparatus 7 further comprises a broadband signal generator (not illustrated), a sound emitter 20, a screen 25 and an indicator element 19 for positioning the mobile device 50.

Unlike the supports 11a, 11b of the apparatuses 5, 6 of Figures 2 and 3, the support 31 of the apparatus 7 does not comprise any articulation. The first element or platform 32 and the second element or platform 33 are mechanically connected in a fixed manner, that is to say, the support 31 does not have the capacity to modify the arrangement of the elements or platforms 32, 33.

The indicator element 19 arranged on the first element or platform 32 has a geometry representing how the mobile device 50 should be situated. The dimensions of the indicator element 19 can vary according to the type of mobile devices which can be calibrated using the apparatus 7.

Both the sound emitter 20 and the screen 25 are arranged in the second element or platform 33, while the broadband signal generator can be embedded in the second element or platform 33, in the sound emitter itself 20 or even in the first element or platform 32.

The screen 25 shows the sound pressure level of the sound wave emitted by the sound emitter 20 or a sound pressure level of the sound wave anticipated in the indicator element 19. The anticipated sound pressure level is based on the sound pressure level of the sound wave emitted by the sound emitter 20.

The mobile device 50 is situated on the indicator element 19 and preferably such that a microphone of the mobile device 50 is oriented towards the sound emitter 20. In some embodiments, an indicator element (additional or forming part of the same indicator element 19) can indicate towards which side the microphone should be oriented in order to facilitate the operation of the mobile device 50 and/or apparatus 7 by a user. The mobile device 50 illustrated in Figure 4 is a cellphone.

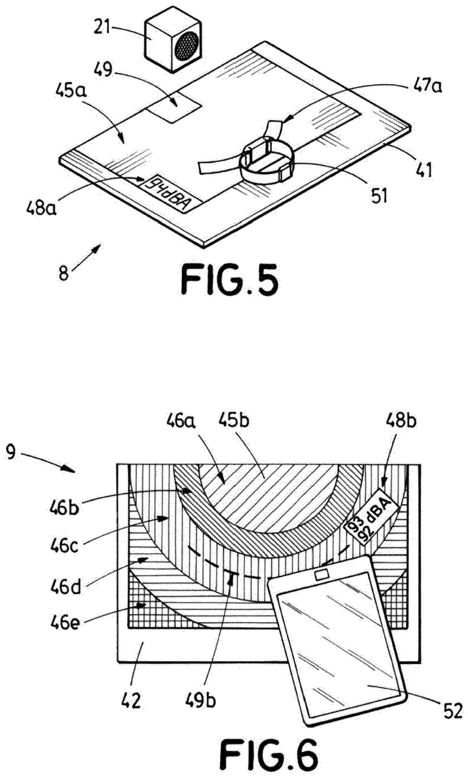

Figure 5 shows an apparatus 8 for adjusting the sound gain of a mobile device 51 according to one embodiment of the invention.

The apparatus 8 comprises a support which is an element or platform 41, an indicator element 45a which, in turn, comprises: a first indicator element 47a for positioning the mobile device 51, a second indicator element 49 for positioning a sound emitter 21 and a third indicator element 48a of a sound level which the mobile device 51 should register, being positioned according to the first indicator element 47a and while the sound emitter 21 is positioned according to the second indicator element 49.

The apparatus 8 further comprises the sound emitter 21 which, unlike the previous embodiments, is separate from the element or platform 41 of the support. A broadband signal generator (not illustrated) is embedded in the same sound emitter 21 and a power source providing electricity both to the broadband signal generator and to the sound emitter 21.

The indicator element 45a arranged in the element or platform 41 of the support represents how the mobile device 51 should be situated so that in the position of the microphone of the mobile device, the sound level corresponds to the level indicated in the third indicator element 48a. The dimensions of the indicator element 45a can vary according to the type of mobile devices which can be calibrated using the apparatus 8. The mobile device 51 illustrated in Figure 5 is a smartwatch.

Figure 6 partially shows an apparatus 9 according to an embodiment of the invention.

The apparatus 9 comprises a broadband signal generator (not illustrated), a sound emitter (not illustrated), a support with at least one element or platform 42 and an indicator element 45b coupled to the element or platform 42.

The indicator element 45b includes a representation, in the manner of a test card, of the different sound pressure levels 46a-46e which a mobile device 52 should register if it is situated such that a microphone of the same is at one of the different indicated levels 46a-46e. The indicator element 45b also includes an indication 48b of the level or sound level margin associated with a determined sound level band, in this case the indication 48b of 92 to 93 dBA is associated with a band 46c which also includes an indication in the form of a dotted line 47b of where the mobile device 52 should be situated.

The apparatus 9, for example, emits a 1 kHz sinusoidal signal which, in the intermediate band 46c, the microphone of the mobile device 52 should register, record or measure a sound level of between 92 and 93 dBA, while in a band 46b closer to the sound emitter, the sound level could have a greater variability (e.g. between 93 dBA and 95 dBA) and in a band 46d further away from the sound emitter, the sound level could oscillate between, for example, 90 and 92 dBA. The mobile device 52 illustrated in Figure 6 is a tablet.

In this text, the word "comprises" and its variants (such as "comprising", etc.) should not be interpreted in an exclusive manner, that is to say, they do not exclude the possibility of what is described including other elements, steps, etc.

In addition, the invention is not limited to the specific embodiments which have been described, but also encompasses for example the variants which can be carried out by the person skilled in the art (for example in terms of selecting materials, dimensions, components, configuration, etc.), from within what emerges from the claims.

## Claims

1. An apparatus (5-9, 100) for adjusting a sound level gain of a mobile device (50-52), comprising:
a support (11, 31, 41-42, 101) for the mobile device (50-52);
a broadband signal generator (102) configured to produce an electric signal; and
a sound emitter (20-21, 103) configured to emit a sound wave corresponding to the electric signal.

2. The apparatus (5-9, 100) of claim 1, wherein the sound emitter (20) is an electroacoustic transducer.

3. The apparatus (5-9, 100) of any of the preceding claims, wherein the broadband signal generator (102) is configured to produce the electric signal at a determined frequency.

4. The apparatus (5-9, 100) of any of the preceding claims, further comprising conditioning means of the electric signal configured to adjust the electric signal level to a determined level.

5. The apparatus (5-7, 9) of any of the preceding claims, wherein the support (11, 31, 42, 101) comprises a first element (12, 32, 41-42) and a second element (13, 33); wherein the sound emitter (20) is arranged in the second element (13, 33) of the support (11, 31, 101); and wherein the first element (12, 32, 41-42) is adapted to situate the mobile device (50-52) on top of said first element (12, 32, 41-42).

6. The apparatus (5-7, 9) of claim 5, wherein the first element (12, 32, 41-42) and the second element (13, 33) of the support (11, 31) are arranged in an angular manner.

7. The apparatus (5-6, 9) of claim 5, wherein the first element (12, 42) and the second element (13) of the support (11, 42) are mechanically joined in an articulated manner (14).

8. The apparatus (5-7, 9) of any of claims 5 to 7, further comprising at least one indicator element (18a-18b, 19, 47a-47b) for positioning the mobile device (50-52), the at least one indicator element (18a-18b, 19, 47a-47b) being arranged in the first element (12, 32, 41-42) of the support (11, 31, 41-42, 101).

9. The apparatus (9, 100) of any of the preceding claims, further comprising at least one indicator element (45a-45b, 48a-48b) of the sound pressure level (46a-46e, 48a-48b) which the mobile device (50-52) should register at one or more points of the at least one indicator element (45a-45b) of sound pressure level.

10. The apparatus (7, 100) of any of the preceding claims, further comprising a screen (25) configured to show a sound pressure level of the sound wave emitted by the sound emitter or an anticipated sound pressure level of the sound wave at a point of the apparatus (7, 100) intended to situate the mobile device (50-52), the anticipated sound pressure level being based on the sound pressure level of the sound wave emitted by the sound emitter (20-21), 103).

11. A method for adjusting a sound level gain of a mobile device, the mobile device being configured to provide information relating to a sound pressure level of a registered sound, the method comprising:
providing an apparatus configured to emit a sound wave and to situate the mobile device for adjusting the gain;
situating the mobile device in the apparatus;
emitting a sound wave at a determined sound pressure level from the apparatus;
registering the sound wave emitted with the mobile device; and
modifying a sound pressure level gain adjustment of the mobile device so that information relating to the sound pressure level of the registered sound wave coincides with a sound pressure level anticipated at a point of the apparatus at which the mobile device is situated, the anticipated sound pressure level being based on the determined sound pressure level.

12. The method of claim 11, wherein the apparatus is an apparatus for adjusting a sound level gain of a mobile device according to any of claims 1-10.

13. The method of any of claims 11-12, further comprising, after the step of situating the mobile device in the apparatus, orienting the mobile device such that a microphone of the mobile device is oriented towards a component of the apparatus configured to emit the sound wave.

14. The method of any of claims 11-13, wherein the step of emitting the sound wave from the apparatus at the determined sound pressure level comprises emitting the sound wave from the apparatus at the determined sound pressure level and a determined frequency.

15. A system for adjusting a sound level gain of a mobile device, comprising:
an apparatus according to any of claims 1-10; and
the mobile device, the mobile device being configured to provide information relating to a sound pressure level of a registered sound wave and to allow one or more parameters of the mobile device to be adjusted which causes the information relating to the sound pressure level of the registered sound wave to coincide with the determined sound pressure level.
